# EUROPÄISCHE PATENTSCHRIFT

(11) **EP 2 014 182 B1**
(45) Veröffentlichungstag und Bekanntmachung des Hinweises auf die Patenterteilung: **30.05.2012**
(21) Anmeldenummer: 08104644.3
(22) Anmeldetag: 04.07.2008
(51) Int. Cl.: A23L 2/38, C12G 3/02, A23L 2/02, A23L 1/28, A23L 1/20

(54) **Verfahren zur Herstellung einer Getränkebasis aus Pflanzenmolke**
Method for manufacturing a drink base from plant whey
Procédé destiné à la fabrication d'une base de boisson à partir de petit-lait de plantes

(30) Priorität: 04.07.2007 CH 10762007
(43) Veröffentlichungstag der Anmeldung: 14.01.2009
(73) Patentinhaber: Schiefthaler-Nairz, Ursula, 8006 Zürich (CH); Nairz, Knud, 8006 Zürich (DE)
(72) Erfinder: Schiefthaler-Nairz, Ursula, 8006 Zürich (CH); Nairz, Knud, 8006 Zürich (DE)
(74) Vertreter: Hepp Wenger Ryffel AG

(56) Entgegenhaltungen:
- WO-A-92/13939
- DE-A1- 10 257 385
- DE-A1- 19 730 538
- DE-A1- 19 958 884
- DE-A1-102004 045 500
- JP-A- 3 043 053
- US-B1- 6 254 900
- THI LE NGUYEN ET AL: "Growth of Lactobacillus paracasei ssp. paracasei on tofu whey." INTERNATIONAL JOURNAL OF FOOD MICROBIOLOGY, Bd. 89, Nr. 1, 15. Dezember 2003 (2003-12-15), Seiten 67-75, XP002498965 ISSN: 0168-1605
- BELLOSO-MORALES GENETTE ET AL: "Manufacture of a beverage from cheese whey using a "tea fungus" fermentation." REVISTA LATINOAMERICANA DE MICROBIOLOGÍA 2003 JAN-JUN, Bd. 45, Nr. 1-2, Januar 2003 (2003-01), Seiten 5-11, XP002498966 ISSN: 0187-4640
- BIOLAND: "Hexerküche - Kombucha-Sojamoke Mango, 500 ml"[Online] 1. Juli 2008 (2008-07-01), Seiten 1-2, XP002498986 Gefunden im Internet: URL:http://www.bioland.de/hersteller/produ ktlexikon/frischware/drinks-milchersatzget raenke/sojadrink.html?detail=52429> [gefunden am 2008-10-02]

## Beschreibung

Die vorliegende Erfindung betrifft das technische Gebiet der fermentierten Erfrischungsgetränke; insbesondere betrifft die Erfindung ein Verfahren zur Herstellung einer Basis für alkoholfreie und leicht alkoholhaltige Erfrischungsgetränke aus Pflanzenmolke.

Durch das steigende Gesundheitsbewusstsein der Konsumenten besteht ein wachsender Bedarf nach möglichst naturbelassenen und gesunden Getränken.

Das Dokument JP3043053 beschreibt ein Verfahren ausgehend von Sojamolke, bei dem mittels Milchsäurebakterien- bzw. Hefegärung ein Getränk oder Gewürz ohne unangenehmen Sojabohnengeschmack hergestellt wird. Dabei handelt es sich um ein mehrstufiges Verfahren, wobei zuvor der pH-Wert der Sojamolke eingestellt und Zucker zugegeben werden muss. Bei der Fermentation mit Milchsäurebakterien muss die Lösung zudem erhitzt und geschüttelt werden, wobei die Konzentration der physiologisch wertvollen Inhaltsstoffe aus der Ausgangsmolke abnimmt. Das Verfahren umfasst zudem wenig schonende Sterilisationsschritte, wobei wiederholt und über einen Zeitraum von insgesamt 45 Minuten auf 121°C erhitzt wird. Zudem wird die Einstellung des pH Werts vor der Fermentation als zwingend beschrieben, was das Verfahren umständlich macht.

Es ist also eine Aufgabe der vorliegenden Erfindung, die Nachteile des Stands der Technik zu vermeiden, insbesondere ein einfaches und zuverlässiges Verfahren bereitzustellen, um Pflanzenmolke, insbesondere Sojamolke, geschmacklich zu verbessern, haltbarer zu machen, die Qualität zu vereinheitlichen und als Getränkebasis für Erfrischungsgetränke verfügbar zu machen.

Diese Aufgabe wird gelöst durch ein erfindungsgemässes Verfahren zur Herstellung einer Getränkebasis; insbesondere wird aus einer Pflanzenmolke eine für den menschlichen Verzehr geeignete Getränkebasis in einem überraschend einfachen und schonenden Verfahren hergestellt.

Das erfindungsgemässe Verfahren sieht die Herstellung einer alkoholfreien oder leicht alkoholhaltigen Getränkebasis vor, wobei eine Pflanzenmolke oder Auszüge einer Pflanzenmolke unter Zugabe von Hefe (oder Hefen) und einem kulturfähigen Ansatz von Kombucha fermentiert wird.

Als "Pflanzenmolke" wird vorliegend der wasserhaltige Überstand verstanden, der bei der Gerinnung und/oder Ausfällung von Proteinbestandteilen und/oder Fetten und/oder anderen Bestandteilen aus einer Pflanzenmilch verbleibt.

Als "Milch" werden vorliegend Gemische auf der Basis einer ersten Flüssigkeit als Dispersionsmittel verstanden. Andere Flüssigkeiten (Emulsion) und/oder feste Stoffe (Suspension) sind in der ersten Flüssigkeit fein verteilt, aber im Wesentlichen nicht gelöst und rufen dadurch eine meist weisse Trübung hervor.

Unter einer "Pflanzenmilch" wird also hier und im Folgenden eine wässerige Emulsion und/oder Suspension aus Pflanzenbestandteilen verstanden, die insbesondere in der Zusammensetzung und/oder der Verwendung und/oder dem Verhalten und/oder Aussehen der tierischen Milch ähnelt. Insbesondere wird vorliegend eine solche Emulsion und/oder Suspension aus Pflanzenbestandteilen als Pflanzenmilch bezeichnet, die als Ersatz für Milch zur Anwendung geeignet ist. Alle diese Emulsionen und/oder Suspensionen aus Pflanzenbestandteilen können entweder direkt als Getränk verwendet werden oder werden weiterverarbeitet, zum Beispiel durch Gerinnung und/oder Ausfällung von Proteinbestandteilen und/oder Fetten und/oder anderen Bestandteilen. Die zurückbleibende wässrige Lösung wird, wie vorstehend dargelegt, im Rahmen der Erfindung Pflanzenmolke genannt und enthält noch viele Substanzen und Nährstoffe aus der Ausgangsmilch. Ein Beispiel für eine solche Pflanzenmolke ist Sojamolke. Es ist jedoch im Rahmen der Erfindung auch möglich, Pflanzenmilch aus anderen Bohnenarten einzusetzen, sowie aus Getreide oder Nüssen; insbesondere Mandelmilch, Kokosmilch, Lupinenmilch, Reismilch und Hafermilch seien hier als Beispiele genannt. Es sind jedoch zahlreiche andere auf pflanzlicher Basis hergestellte Flüssigkeiten mit milchartigem Charakter bekannt.

Pflanzliche Sekrete, zumeist ätherische Öle oder Harze, welche nicht zum menschlichen Verzehr geeignet sind, von Pflanzenphysiologen aber gelegentlich als Pflanzenmilch oder Milchsäfte bezeichnet werden, sind keine Pflanzenmilch gemäss vorliegender Definition.

Die Pflanzenmolke wird typischerweise als Nebenprodukt erhalten und in der Regel nicht weiterverwertet, so dass sie unter Umständen sogar speziell entsorgt werden muss. Mit dem vorliegenden Verfahren lässt sich ein Erfrischungsgetränk auf der Basis einer solchen Pflanzenmolke herstellen.

Unter Zugabe einer Hefe (oder Hefen) wird vorliegend die Zugabe eines kulturfähigen Ansatzes einer Hefe (oder von Hefen) verstanden. Weitere Mikroorganismen können ggf. zusätzlich verwendet werden, wobei Mikroorganismen verstanden werden als zelluläre oder nichtzelluläre mikrobiologische Einheiten, die fähig sind, sich zu vermehren oder genetisches Material zu übertragen, insbesondere Bakterien, Algen, Pilze, Protozoen, Viren und Viroide; ihnen gleichgestellt sind Gemische und Gegenstände, die solche Einheiten enthalten, sowie Zellkulturen und biologisch aktives genetisches Material. Für die vorliegende Erfindung sind insbesondere Bakterien und Pilze von Bedeutung.

Das erfindungsgemässe Verfahren beinhaltet die Fermentierung von Pflanzenmolke, in einer bevorzugten Ausführungsform Sojamolke, mit Hilfe von
a) Hefe (oder Hefen); und
b) einem kulturfähigen Ansatz von Kombucha.

In dem Verfahrensschritt der Fermentierung mit Hefe (oder Hefen) können sowohl Wein- als auch Bierhefe, sowie natürlich auf Pflanzenteilen vorkommende Hefestämme eingesetzt werden.

Überraschend hat sich herausgestellt, dass auf jegliche Einstellung des pH der Pflanzenmolke vor der Fermentierung mit Hefe verzichtet werden kann; der pH Wert der Pflanzenmolke von typischerweise 5-6 ist für die Fermentierung der Pflanzenmolke mit Hefe gut geeignet und dient zur optimalen Vorbereitung der Fermentierung mit Kombucha.

In dem Verfahrensschritt der Fermentierung mit einem kulturfähigen Ansatz von Kombucha können alle handelsüblichen Kombucha Kulturen eingesetzt werden. Eine Kombucha Kultur besteht vorwiegend - aber nicht ausschliesslich - aus Acetobakterien und Hefestämmen, die in Symbiose leben und Zucker zu verschiedenen Säuren und anderen Verbindungen verstoffwechseln.

Der Begriff Kombucha, auch Teepilz genannt, wird im allgemeinen Sprachgebrauch sowohl für eine Symbiose aus Mikroorganismen als auch für ein Teegetränk gebraucht, welches mit Hilfe der Kombucha Kultur fermentiert wurde. Im Rahmen der Erfindung bezeichnet Kombucha die Symbiose von vorwiegend - aber nicht ausschliesslich - Acetobakterien und Hefestämmen. Eine solche Kombucha Kultur kann sich aus einer Vielzahl unterschiedlicher Mikroorganismen zusammensetzen, sowohl Bakterien als auch Hefen. Je nach Hersteller, respektive Kultur, kann die genaue Zusammensetzung variieren. Solche Symbiosen können insbesondere Gemeinschaften sein enthaltend Mikroorganismen der Gattungen *Acetobacter spec., Gluconobacter spec., Lactobacillus spec., Brettanomyces*/*Dekkera spec., Zygosaccharomyces spec., Saccharomyces spec., Pichia spec., Candida spec., Kloeckera spec., Saccharomycoides spec., Shizosaccharomyces spec., Torulospora spec., Rhodotorula spec., Torulopsis spec., Issatchenkia spec., Hanseniaspora spec..* Allerdings sind auch andere, weitere Mikroorganismen, die in der Lage sind, Symbiosen einzugehen, nicht ausgeschlossen. Weiterhin ist darauf hinzuweisen, dass durchaus in geringer relativer Anzahl auftretende Organismen bei Kombucha Kulturen nicht zwangsläufig als Kontamination gelten, sondern einen wichtigen Beitrag zur Aufrechterhaltung und Initiierung der Symbiose leisten können (sog. Symbiosehelfer).

In einer besonderen Ausführungsform der vorliegenden Erfindung wird die Hefe *Saccharomyces cerevisiae* (Bierhefe) verwendet (insbesondere in Schritt a). Die beschriebene Fermentation mittels Bierhefe findet typischerweise bei in Gärkellern üblichen Temperaturen und ohne Zuckerzusatz und ohne Schütteln oder Rühren - also unter besonders schonenden Bedingungen - statt. Mit der Bierhefe wird der in Brauereien üblicherweise verwendete Mikroorganismus eingesetzt.

Erfindungsgemäss insbesondere in Schritt a) einsetzbare Hefen sind einzellige Pilze, die sich asexuell durch Knospung vermehren können. In Frage kommen insbesondere, aber nicht ausschliessend, Hefen der Gattungen *Schizosaccharomyces spec., Saccharomy*ces *spec., Candida spec., Brettanomyces spec., Pichia spec..* In einer bevorzugten Ausführungsform kommen Hefen aus der Gattung *Saccharomyces spec.* zur Anwendung, zum Beispiel *Saccharomyces bailii, Saccharomyces bayanus, Saccharomyces boulardii, Saccharomyces carlsbergensis, Saccharomyces ellipsoides, Saccharomyces rouxii, Saccharomyces uvarum,* etc.

Bei der Vor-Fermentation mit Hefen (oder Hefen) und Kombucha hat sich überraschend herausgestellt, dass die Kombucha Kultur bei der Nach-Fermentierung stabiler ist, eine kürzere Anwachsphase hat und auch resistenter gegenüber Verunreinigungen ist. Ausserdem ist das Endprodukt haltbarer und der Geschmack stabiler. Diese überraschende Wirkung der Vorfermentierung durch Hefe auf die Kombucha Kultur ist bislang nicht abschliessend geklärt. Diese Wirkung stellt sich sowohl ein, wenn vorgängig mit Hefe fermentiert wird, als auch wenn die Hefe gleichzeitig mit dem kulturfähigen Ansatz von Kombucha zugegeben wird. Die vorteilhafte Wirkung der Hefe auf die Kombucha-Fermentierung ist jedoch deutlich ausgeprägter, wenn vorgängig mit Hefe fermentiert wird und erst anschliessend Kombucha zugegeben wird.

Eine bevorzugte Ausführungsform der vorliegenden Erfindung sieht demnach vor, dass zuerst eine Fermentation mit Hefe stattfindet, die Fermentation stoppt (oder mit üblichen Mitteln/Massnahmen gestoppt wird), eine Kombucha Kultur zugegeben wird und, insbesondere bei Erreichen eines gewünschten Säuregrades, die Fermentation stoppt oder (mit üblichen Mitteln/Massnahmen) gestoppt wird. Eine alternative Ausführungsform der vorliegenden Erfindung sieht vor, dass die Fermentation mit Hefe und Kombucha zeitgleich durchgeführt wird.

Als besonders vorteilhaft hat sich die Verwendung von Sojamolke als Pflanzenmolke für das erfindungsgemässe Verfahren herausgestellt.

Sojamolke ist die übliche Bezeichnung für die bei der Tofuerzeugung anfallende Flüssigkeit, die sich nach Zusetzen eines Gerinnungsmittels zur Sojamilch oder nach der Ansäuerung der Sojamilch als wässriger Überstand abscheidet. Da bei der Tofuherstellung etwa das gleiche Volumen an Sojamolke wie an Tofu anfällt und die Tofuproduktion in Europa steigt, betrifft die vorliegende Erfindung ein in grossen Mengen anfallendes, bisheriges Abfallprodukt. Sojamolke enthält jedoch noch wertvolle und gesundheitsfördernde Inhaltsstoffe der Sojabohne wie lösliche Eiweisse, Vitamine, Mineralstoffe, Lipide und Isoflavone, ausserdem verschiedene lösliche Kohlenhydrate. Deshalb wird auch empfohlen, die Sojamolke als Pflanzendünger oder als Zusatz zu Shampoo, Brotteig oder Tierfutter zu verwenden.
In der Schweiz wird Tofu meist biologisch oder biologischdynamisch hergestellt. Die dahinter stehende Ideologie bevorzugt eine schonende Nutzung der Ressourcen und geschlossene Kreisläufe. Die Verwendung des bisherigen Abfallproduktes Sojamolke als Nahrungsmittel schliesst hier eine grosse Lücke und ist auch ökologisch sinnvoll und wünschenswert.

Da insbesondere Sojamolke aus einem üblichen Prozess der Sojamilchgewinnung mit einer Temperatur von etwa 80°C bis 95°C anfällt, kann sie unmittelbar nach dem Abtrennen vom Tofu steril abgefüllt werden. Temperaturen von max. 95°C werden in der Sojamilchgewinnung typischwerweise längstens für ca. 20 Minuten erreicht. Die Sojamolke kann aber auch vorteilhaft lediglich unter Pasteurisierungsbedingungen erhalten werden, bspw. bei ≤ 70°C. Je nach verwendeter Pflanzenmolke unterscheidet sich die Gewinnung der Molke. Der Fachmann ist mit Wegen und Verfahren vertraut, Pflanzenmolken, auch Sojamolken, schonend zu gewinnen.

Die unbehandelte Sojamolke ist jedoch für den menschlichen Verzehr nicht gut geeignet. Sie hat einen schalen Geschmack, der zudem nicht stabil ist. Selbst bei gekühlter Lagerung verändert er sich sehr schnell und wird leicht bitter bis unangenehm.
Mit dem erfindungsgemässen Verfahren gelingt es nun, den Geschmack der Sojamolke wesentlich zu verbessern und zu stabilisieren. In fermentierter und verdünnter Form stellt Sojamolke zudem einen ausgezeichneten Geschmacksträger für Erfrischungsgetränke dar.

Recht stark alkoholhaltige Getränke wurden bereits aus Sojamolke mit anderen, aufwendigen Verfahren hergestellt; die Problematik der beschränkten Lagerfähigkeit durch Kontaminationen mit Mikroorganismen stellt sich bei diesen Getränken aufgrund des Alkoholgehalts grundsätzlich nur unwesentlich bis gar nicht. Beispielsweise wird genannt:

In US 3,769,437 wird ein Verfahren zur Gewinnung eines stark alkoholischen Getränkes aus Sojamolke mittels Vergärung durch Hefe beschrieben. Bei diesem Verfahren muss eine grosse Menge Zucker zugesetzt werden und die Vergärungszeit beträgt etwa 3 Wochen bis 2 Monate. Danach muss das Getränk destilliert und eventuell noch gereift werden, um das angestrebte Produkt zu erhalten. Dieses enthält 50-70% Alkohol und hat einen whiskyartigen Charakter. Es handelt sich um ein umständliches Verfahren und beim Produkt in diesem Fall um ein stark alkoholisches Getränk.

In JP 51061672 ist die Fermentation von Sojamolke zur Gewinnung eines alkoholischen Getränkes beschrieben. Bei diesem Verfahren müssen jedoch verschiedene Enzyme zugesetzt, ein Koagulat entfernt, die so erhaltene Lösung konzentriert und mit Calzium-Panthotenat versetzt werden, bevor die Hefe zugegeben wird. Dadurch wird das Verfahren sehr aufwändig. Zudem ist das Produkt ebenfalls ein alkoholisches Getränk.

Nach der Anwendung des erfindungsgemässen Verfahrens ist die Sojamolke gut verträglich, geschmacklich stabil und ihre gesundheitsfördernden Inhaltsstoffe sind in wohlschmeckender Form konsumierbar. So kann die Sojamolke als natürliche Basis beispielsweise für Erfrischungs-, Sport-, Gesundheits- oder Aufbaugetränke verwendet werden.

Der Genuss von Sojabohnen ist insbesondere in Asien seit Jahrhunderten etabliert und verbreitet sich auch zunehmend in der westlichen Welt. Ihr gesundheitsfördernder Effekt ist weithin unumstritten. So dürfen in den U.S.A. seit Oktober 1999 sojahaltige Nahrungsmittel als "gesundheitsfördernd" bezeichnet werden, da das zuständige Amt, die "Food and Drug Administration", es als erwiesen ansieht, dass Sojaeiweiss das Risiko für Herzerkrankungen vermindern kann. Auch die Tatsache, dass die japanische Bevölkerung eine wesentlich geringere Brustkrebsrate aufweist als die Bewohner der westlichen Welt, wird mit dem hohen Sojakonsum der Japaner in Zusammenhang gebracht. Zudem wird den Inhaltsstoffen der Sojabohne eine mildernde Wirkung auf die Symptome der Menopause zugeschrieben.

Dafür mitverantwortlich sind die Isoflavone, eine Gruppe von phenolischen sekundären Pflanzeninhaltsstoffen. Sie werden auch als Phytoöstrogene bezeichnet, da sie mit dem menschlichen Rezeptor für Östrogen interagieren können. Die Sojabohne enthält eine ganze Reihe von Isoflavonderivaten (etwa Genistin, Daidzein, Glycitein, Coumestrol und Glyceollin) und ist damit eine der wichtigsten natürlichen Isoflavonquellen. Je nach der Herstellungsweise von Tofu sind in der Sojamolke noch relativ grosse Mengen an Isoflavonen, etwa im ppm Bereich, enthalten.
Die Aufnahme von Isoflavonen mit der Nahrung gilt als gesundheitsfördernd. So werden die Isoflavone etwa für den cholesterinspiegelsenkenden Effekt von Sojaprodukten verantwortlich gemacht. Zudem ist es wahrscheinlich, dass natürliche Isoflavone Brustkrebs verhindern und die Symptome der Menopause abschwächen können.

Die wachstumshemmende Wirkung von Sojabohnen-Isoflavonen auf bestimmte Krebszellen ist wissenschaftlich erwiesen. (Salvo VA, Boue SM, Fonseca JP, Elliott S, Corbitt C, Collins-Burow BM, Curiel TJ, Srivastav SK, Shih BY, Carter-Wientjes C, Wood CE, Erhardt PW, Beckman BS, McLachlan JA, Cleveland TE, Burow ME.: Antiestrogenic glyceollins suppress human breast and ovarian carcinoma tumorigenesis. ("Antiöstrogene Glyceolline supprimieren die Tumorgenese von menschlichen Brust- und Eierstockkarzinomen.") Clin Cancer Res. 2006 Dec 1;12(23):7159-64.; Verheus M, van Gils CH, Keinan-Boker L, Grace PB, Bingham SA, Peeters PH.: Plasma Phytoestrogens and Subsequent Breast Cancer Risk. ("Plasma Phytoöstrogene und das daraus folgendende Brustkrebsrisiko") J Clin Oncol. 2007 Jan 2; Wood CE, Clarkson TB, Appt SE, Franke AA, Boue SM, Burow ME, McCoy T, Cline JM.: Effects of soybean glyceollins and estradiol in postmenopausal female monkeys ("Die Wirkung von Sojabohnen-Glyceollinen und Östradiol bei postmenopausalen weiblichen Affen") Nutr Cancer. 2006;56(1):74-81.)

Vom gesundheitlichen Standpunkt her ist es also von Vorteil, regelmässig Sojaprodukte zu sich zu nehmen. Da aber viele Menschen in der westlichen Welt den Geschmack der Sojabohne als unangenehm empfinden, ist der Konsum von Sojaprodukten bisher auf Veganer und extrem Gesundheitsbewusste beschränkt. Mit der nach dem erfindungsgemässen Verfahren hergestellten Getränkebasis wird nun eine Sojaquelle angeboten, die nichts mit dem Geschmack von Sojamilch oder ähnlichem zu tun hat. Mit dieser Basis können Getränke hergestellt werden, deren Geschmack modern und spritzig ist.

Bestimmte Isoflavone sind empfindlich gegen Erhitzen. Übermässiges Erhitzen führt ausserdem zu Veränderungen in der natürlichen Zusammensetzung der Isoflavone. Entsprechend wird im Rahmen der Erfindung bevorzugt zum Erhalt einer hohen Menge und einer natürlich vorkommenden Mischung an Isoflavonen deshalb das Verfahren thermisch so schonend wie möglich zu gestalten.

Eine mögliche Ausführungsform sieht vor, dass die Pflanzenmolke vor der Fermentation behandelt wird, insbesondere durch Zugabe einer Säure und/oder durch Filtration und/oder Zentrifugation. Vor der Fermentation können also Zitronensaft, Essig oder sonst ein geeignetes Säuerungsmittel oder pH-Wert senkende Mikroorganismen zugesetzt werden. Nach der Senkung des pH-Wertes (obschon der übliche pH Wert einer Pflanzenmolke von etwa 5-6 sehr gut geeignet ist, siehe oben) können ausgefallene Proteine abzentrifugiert oder abfiltriert oder mit sonstigen geeigneten Methoden aus der Pflanzenmolke, in einer bevorzugten Ausführungsform Sojamolke, entfernt werden. Wenn ein stärker proteinhaltiges Getränk erwünscht ist, muss die Pflanzenmolkenicht vorbehandelt werden. Auch jede Art von Auszügen aus der Pflanzenmolke kann erfindungsgemäss fermentiert werden.

Die Pflanzenmolke, in einer bevorzugten Ausführungsform Sojamolke, kann vor der Fermentation mit Saccharose oder einer anderen Glucosequelle versetzt werden. Wird Hefe eingesetzt, erfolgt die Fermentation der Pflanzenmolke, in einer bevorzugten Ausführungsform Sojamolke, jedoch bevorzugt ohne Zugabe von Zucker oder anderen Kohlenhydraten.

Die Pflanzenmolke, in einer bevorzugten Ausführungsform Sojamolke, kann vor der Fermentation verdünnt und/oder - weniger bevorzugt, s.o. - aufgekocht und mit jeder Art von Teepflanzenmaterial sowie anderen Geschmacks- und Inhaltsstoffen versetzt werden.

Ein weiterer Aspekt der Erfindung sieht vor, dass die Fermentation durch den fortlaufenden Abbau der in der Pflanzenmolke enthaltenen Kohlenhydrate ohne weitere äussere Einwirkung stoppt. Wenn keine Kohlenhydratressourcen zugesetzt werden, stoppt die Fermentation durch Abbau der in der Pflanzenmolke natürlich vorhandenen Kohlenhydrate. Bei Fermentation mittels Hefe liegt der Alkoholgehalt der ohne Zuckerzusatz vergorenen Molke dann zuverlässig unter dem gesetzlich erlaubten Grenzwert für alkoholfreie Getränke von 0.5 Vol.%.

Eine weitere Ausführungsform der Erfindung sieht vor, dass eine durch Mikroorganismen, insbesondere Hefen und/oder Kambucha, fermentierbare Kohlenhydratressource zugesetzt wird und die Fermentation zu einem beliebigen Zeitpunkt oder bei Erreichen eines bestimmten Alkoholgehaltes gestoppt wird.

In einer bevorzugten Ausführungsform des erfindungsgemässen Verfahrens wird in der resultierenden Getränkebasis ein Alkoholgehalt von 1,2 Vol.% nicht überschritten.

Als alkoholfreie Getränkebasis wird hier verstanden, dass der Alkoholgehalt < 0,5 Vol.% ist. Unter einer leicht alkoholhaltigen Getränkebasis wird hier ein Alkoholgehalt von mehr oder gleich 0,5 Vol.% bis maximal 1,2 Vol.% verstanden.

In einer besonderen Ausführungsform wird, wie vorstehend beschrieben, nach der Fermentation mit Hefe eine Fermentation mit Kombucha durchgeführt, wobei zuvor vorzugsweise die in dem Ansatz noch enthaltenen Hefezellen durch schonende Pasteurisation oder andere geeignete Methoden abgetötet werden bzw. durch andere Mittel (bspw. Filtration) entfernt werden. Für die Produktion im grossen Massstab ist es von Vorteil, die eingesetzte Kombuchakultur mechanisch zu zerkleinern oder zu homogenisieren. Dafür können Rühr- oder Hackwerke oder Mixer eingesetzt werden. Um das Anlaufen der Fermentation mit Kombucha zu beschleunigen, ist es von Vorteil, eine Starterlösung, das ist ein kleines Volumen der bereits doppelt fermentierten Pflanzenmolke, in einer bevorzugten Ausführungsform Sojamolke, und Zucker zuzusetzen.

Die Fermentation mit Kombucha macht die Molke insbesondere etwas säuerlicher und aromatischer; das resultierende Fermentationsprodukt eignet sich dadurch noch besser als Basis für Erfrischungsgetränke und kann in dieser Form aber auch unverdünnt konsumiert werden.

Die Fermentation mit Kombucha wird - je nach eingesetzter Kombuchamenge - nach etwa einem bis etwa acht Tagen gestoppt, jedenfalls aber, wenn der gewünschte Säuregehalt des Ansatzes erreicht ist.

Ein weiterer Aspekt der Erfindung betrifft ein alkoholfreies oder leicht alkoholhaltiges Getränk auf der Basis einer Getränkebasis, erhältlich nach dem erfindungsgemässen Verfahren, wobei die Getränkebasis insbesondere mit Wasser verdünnt; und/oder karbonisiert; und/oder mit Aromen, und/oder Fruchtsäften oder Fruchtsaftkonzentraten; und/oder aromatischen Ölen; alkoholischen Pflanzenextrakten und/oder anderen Geschmacksstoffen; und/oder Zucker oder Süssstoffen versetzt wird und wobei der pH Wert des Getränk zwischen ungefähr 2.8 und ungefähr 3.5 liegt. Als alkoholoische Pflanzenextrakte können bspw. Extrakte von Ingwer, Wacholder, Zitronengras oder Kardamom eingesetzt werden. Bei dem Zusatz von alkoholischen Extrakten wird der vorstehend genannte, nur geringe Alkoholgehalt des fertigen Getränks ohne weiteres eingehalten, da die Extrakte aufgrund der üblicherweise hohen Konzentration in nur sehr geringen Mengen eingesetzt werden müssen.

Auch Gewürze, Gemüsesäfte und -extrakte können zur Verfeinerung des Getränks hinzugefügt werden. Eine weitere Variante ist die Anreicherung mit einem belebenden Zusatztstoff wie Coffein oder Theobromin oder einem anderen Wirkstoff oder Extrakt aus einer der Kakao-, Kaffee-, Tee-, Guarana-, Mate- oder Cocapflanzenarten. Es lassen sich auch isotonische Zusatzstoffe oder Vitamine zur Anreicherung hinzufügen, um ein Sportgetränk zu erhalten. Auch eine Mischung mit limonadeartigen Erfrischungsgetränken oder auch ein Mixen mit geringen Mengen Alkohol ist eine mögliche Anwendung.

Ein weiterer Aspekt der Erfindung betrifft ein Verfahren, insbesondere wie vorstehend beschrieben, zur Herstellung einer alkoholfreien oder leicht alkoholhaltigen Getränkebasis, wobei eine Pflanzenmolke, insbesondere Sojamolke, mit einem kulturfähigen Ansatz von Kombucha fermentiert wird und wobei die Pflanzenmolke während der Herstellung der Getränkebasis einer Temperatur von ≥ 70°C für einen Zeitraum von höchstens 2.5 Minuten, vorzugsweise höchstens 1.5 Minuten, besonders bevorzugt gar nicht ausgesetzt wird. Völlig überraschend hat bereits dieses milde Pasteurisierungsregime (Bspw. Flaschenpasteurisierung im Wasserbad bei 70°C für 90 Sekunden) eine absolut ausreichende Wirkung und steht den im Stand der Technik verwendeten Sterilisierungsbedingungen im Ergebnis der Haltbarkeit in nichts nach.

Besonders bevorzugt erfolgt die Herstellung einer erfindungsgemässen Getränkebasis also mit einem schonenden Verfahren, um den Gehalt und die Zusammensetzung der in der Sojamolke natürlich vorkommenden Stoffe, insbesondere der Isoflavone, möglichst zu erhalten. Hierbei hat sich überraschend herausgestellt, dass eine gewisse stabilisierende mikrobielle Eigenschaft der Kombucha Kultur den Verzicht auf starke Sterilisationsschritte ermöglicht. (Sterilisation wird üblicherweise bei 121 Grad Celsius für einen Zeitraum, der abhängig vom Organismus ist, durchgeführt. UHT sieht gar eine Erhitzung auf 135 bis 150 Grad Celsius für einen Zeitraum von 2-3 Sekunden vor.)

Nachfolgend sind einige erfindungsgemässe Beispiele zur näheren Erläuterung aufgeführt, ohne dass jedoch die vorliegende Erfindung auf diese Ausführungsformen zu beschränken ist.

### Beispiel 1 (Vorfermentierung)

Sojamolke wird in sterilen Behältern gekühlt gelagert und innerhalb von etwa 1-2 Tagen in Fässer transferiert, die mit einem Gäraufsatz verschlossen werden. Gleichzeitig wird eine bestimmte Menge an einer Lösung mit untergäriger Bierhefe (bevorzugt etwa 10 Millionen bis 30 Millionen Zellen pro Milliliter Molke) zugesetzt und durch kurzes Schütteln mit der Sojamolke vermischt. Die Fässer werden im Gärkeller bei einer Temperatur zwischen 0°C und 25°C, bevorzugt zwischen 5°C und 20°C, am meisten bevorzugt bei etwa 14°C gelagert. Nach etwa einer Woche ist die Fermentation abgeschlossen. Um die Fermentation zu beschleunigen kann auch eine grössere Menge Bierhefe zugesetzt werden.

Diese fermentierte Sojamolke ist nun mehrere Wochen haltbar. Zur Herstellung eines alkoholfreien Erfrischungsgetränkes wird die fermentierte Sojamolke mit Wasser im Verhältnis 1:1 bis 1:20, vorzugsweise im Verhältnis 1:3 bis 1:10, am meisten bevorzugt im Verhältnis 1:6,6 verdünnt, mit Fruchtsaftkonzentrat, Zucker oder Zuckeraustauschstoffen und vorzugsweise zusätzlich mit aromatischen Pflanzenextrakten versetzt und danach karbonisiert. Nach dem Abfüllen wird eine Flaschenpasteurisation bei etwa 70°C durchgeführt, um ein mehrere Monate haltbares Getränk zu erhalten.

### Beispiel 2 (Weiter-Fermentierung mit Kombucha)

Die nach der im Beispiel 1 beschriebenen Methode mit Hefe vergorene Molke wird pasteurisiert und entweder unverdünnt oder im Verhältnis zwischen 1:1 und 1:20, vorzugsweise im Verhältnis 1:2 bis 1:5, am meisten bevorzugt im Verhältnis 1:2 mit Wasser verdünnt, mit Zucker, pro Liter zwischen etwa 5g und 500g, vorzugsweise zwischen 50g und 150g pro Liter, am meisten bevorzugt 100g pro Liter, und Kombuchakultur, zwischen 2g und 200g Frischgewicht pro Liter Lösung, vorzugsweise etwa 10g bis 60g Frischgewicht pro Liter Lösung, am meisten bevorzugt 20g bis 40g Frischgewicht pro Liter Lösung versetzt, die davor durch Mixen oder Zerhacken zerkleinert worden sein kann. Die Fermentation erfolgt bei einer Temperatur zwischen 0°C und 30°C, bevorzugt zwischen 10°C und 25°C, am meisten bevorzugt bei Raumtemperatur in einem luftdurchlässig verschlossenen oder belüfteten Behälter ohne Rühren. Nach Erreichen des gewünschten Säuregrades, das ist in der Regel nach etwa 1.5 bis 2.5 Tagen, wird die Kombuchakultur durch ein Sieb oder andere geeignete Mittel entfernt und die Fermentation durch Pasteurisation, wie vorstehend beschrieben, oder ein anderes geeignetes Verfahren gestoppt.

### Beispiel 3 (Fermentation mit Kombucha)

Sojamolke wird aufgekocht, eine beliebige Teemischung - vorzugsweise Früchtetee, aromatisierter Schwarztee oder Grüntee - wird zugesetzt. Nach der Ziehzeit des Tees und dem Entfernen der Teemischung wird der so erhaltenen Lösung Zucker, pro Liter zwischen etwa 5g und 500g, vorzugsweise zwischen 50g und 150g pro Liter, am meisten bevorzugt 100g pro Liter, zugegeben. Nach dem Abkühlen auf Raumtemperatur wird die Lösung mit einer ausreichenden Menge an Kombuchakultur, etwa zwischen 2g und 200g Frischgewicht pro Liter Lösung, vorzugsweise etwa 10g bis 60g Frischgewicht pro Liter Lösung, am meisten bevorzugt 20g bis 40g pro Liter Lösung, versetzt, die davor durch Mixen oder Zerhacken zerkleinert worden sein kann, und bei Raumtemperatur in einem nicht luftdicht verschlossenen oder belüfteten Behälter etwa einen halben bis 12 Tage, vorzugsweise einen bis 7 Tage, am meisten bevorzugt 2 bis 4 Tage, inkubiert. Nach dem Entfernen der Kombuchakultur etwa durch ein Sieb oder einen Filter oder andere geeignete Methoden hat man ein wohlschmeckendes, angenehm säuerliches Getränk gewonnen, das durch Pasteurisation wie vorstehend beschrieben oder andere geeignete Methoden haltbar gemacht werden kann. Es kann vorzugsweise in verdünnter und karbonisierter Form als Erfrischungsgetränk genossen werden.

## Patentansprüche

1. Verfahren zum Herstellen einer alkoholfreien oder leicht alkoholhaltigen Getränkebasis, wobei eine Pflanzenmolke oder Auszüge einer Pflanzenmolke unter Zugabe von
- Hefe oder Hefen; und
- einem kulturfähigen Ansatz von Kombucha fermentiert wird.

2. Verfahren nach Anspruch 1, wobei besagte Pflanzenmolke Sojamolke ist.

3. Verfahren nach Anspruch 1 oder 2, wobei die Hefe *Saccharomyces cerevisiae* ist.

4. Verfahren nach einem der Ansprüche 1 bis 3, **dadurch gekennzeichnet, dass** die Fermentation durch den fortlaufenden Abbau der in der Pflanzenmolke enthaltenen Kohlenhydrate stoppt.

5. Verfahren nach einem der Ansprüche 1 bis 3, **dadurch gekennzeichnet, dass** eine durch Mikroorganismen, insbesondere Hefen und/oder Kambucha, fermentierbare Kohlenhydratressource zugesetzt wird und die Fermentation zu einem beliebigen Zeitpunkt oder bei Erreichen eines bestimmten Alkoholgehaltes gestoppt wird.

6. Verfahren nach einem der Ansprüche 4 oder 5, wobei die Fermentation bei einem Alkoholgehalt von maximal 1,2 Vol.% gestoppt wird.

7. Verfahren nach einem der Ansprüche 4 bis 6, wobei die Fermentation bei einem Alkoholgehalt von maximal 0,5 Vol.% gestoppt wird.

8. Verfahren nach einem der Ansprüche 1 bis 7, wobei die Pflanzenmolke vor der Fermentation behandelt wird, insbesondere durch Zugabe einer Säure und/oder durch Filtration und/oder Zentrifugation.

9. Verfahren nach einem der Ansprüche 1 bis 8, **dadurch gekennzeichnet, dass** die Fermentation mit Hefe und Kombucha zeitgleich durchgeführt wird.

10. Verfahren nach einem der Ansprüche 1 bis 9, **dadurch gekennzeichnet, dass** zuerst eine Fermentation mit Hefe stattfindet, in einem zweiten Schritt die Fermentation stoppt oder gestoppt wird, in einem dritten Schritt eine Kombucha Kultur zugegeben wird und in einem vierten Schritt, insbesondere bei Erreichen eines gewünschten Säuregrades, die Fermentation stoppt oder gestoppt wird.

11. Verfahren insbesondere nach einem der Ansprüche 1 bis 10 zur Herstellung einer alkoholfreien oder leicht alkoholhaltigen Getränkebasis, wobei eine Pflanzenmolke, insbesondere Sojamolke, mit einem kulturfähigen Ansatz von Kombucha fermentiert wird und wobei die Pflanzenmolke während der Herstellung der Getränkebasis einer Temperatur von ≥ 70°C für einen Zeitraum von höchstens 2.5 Minuten, vorzugsweise höchstens 1.5 Minuten, besonders bevorzugt gar nicht ausgesetzt wird.

12. Getränkebasis, hergestellt mit einem Verfahren gemäss einem der Ansprüche 1-11.

13. Alkoholfreies oder leicht alkoholhaltiges Getränk, erhältlich unter Verwendung einer Getränkebasis gemäss Anspruch 12.

14. Getränk gemäss Anspruch 13, wobei die Getränkebasis mit Wasser verdünnt; und/oder karbonisiert; und/oder mit Aromen, und/oder Fruchtsäften oder Fruchtsaftkonzentraten; und/oder aromatischen Ölen; alkoholischen Pflanzenextrakten und/oder anderen Geschmacksstoffen; und/oder Zucker oder Süssstoffen versetzt wird und wobei der pH Wert des Getränk zwischen ungefähr 2.8 und ungefähr 3.5 liegt.

## Claims

1. Method for producing an alcohol-free or slightly alcoholic drink base, wherein a plant whey or extracts of a plant whey are fermented with addition of
- yeast or yeasts; and
- a cultivable kombucha starter culture.

2. Method according to Claim 1, wherein said plant whey is soya whey.

3. Method according to Claim 1 or 2, wherein the yeast is *Saccharomyces cerevisiae.*

4. Method according to any one of Claims 1 to 3, **characterized in that** the fermentation is stopped by the progressive breakdown of the carbohydrates present in the plant whey.

5. Method according to any one of Claims 1 to 3, **characterized in that** a carbohydrate resource that is fermentable by microorganisms, in particular yeasts and/or kombucha, is added and the fermentation is stopped at any desired time point or when a certain alcohol content is achieved.

6. Method according to either of Claims 4 and 5, wherein the fermentation is stopped at an alcohol content of a maximum of 1.2% by volume.

7. Method according to any one of Claims 4 to 6, wherein the fermentation is stopped at an alcohol content of a maximum of 0.5% by volume.

8. Method according to any one of Claims 1 to 7, wherein the plant whey is treated before the fermentation, in particular by addition of an acid and/or by filtration and/or centrifugation.

9. Method according to any one of Claims 1 to 8, **characterized in that** the fermentation is carried out with yeast and kombucha simultaneously.

10. Method according to any one of Claims 1 to 9, **characterized in that**, first, a fermentation with yeast takes place, in a second step the fermentation stops or is stopped, in a third step a kombucha culture is added and in a fourth step, in particular when a desired degree of acidity is reached, the fermentation stops or is stopped.

11. Method, in particular according to any one of Claims 1 to 10, for producing an alcohol-free or slightly alcoholic drink base, wherein a plant whey, in particular soya whey, is fermented with a cultivable kombucha starter culture and wherein the plant whey, during the production of the drink base, is exposed to a temperature of ≥ 70°C for a period of at most 2.5 minutes, preferably at most 1.5 minutes, particularly preferably not at all.

12. Drink base, produced using a method according to any one of Claims 1-11.

13. Alcohol-free or slightly alcoholic drink, obtainable using a drink base according to Claim 12.

14. Drink according to Claim 13, wherein the drink base is diluted with water; and/or carbonated; and/or admixed with flavours, and/or fruit juices or fruit juice concentrates; and/or aromatic oils; alcoholic plant extracts and/or other flavour substances; and/or sugar or sweeteners, and wherein the pH of the drink is between approximately 2.8 and approximately 3.5.

## Revendications

1. Procédé de fabrication d'une base de boisson non alcoolisée ou légèrement alcoolisée, dans lequel un lactosérum végétal ou des extraits d'un lactosérum végétal sont fermentés avec ajout de
- une ou plusieurs levures ; et
- une préparation cultivable de kombucha.

2. Procédé selon la revendication 1, dans lequel ledit lactosérum végétal est du lactosérum de soja.

3. Procédé selon la revendication 1 ou 2, dans lequel la levure est *Saccharomyces cerevisiae.*

4. Procédé selon l'une quelconque des revendications 1 à 3, **caractérisé en ce que** la fermentation est arrêtée par la décomposition progressive des glucides contenus dans le lactosérum végétal.

5. Procédé selon l'une quelconque des revendications 1 à 3, **caractérisé en ce qu'**une ressource de glucide fermentable par des microorganismes, notamment par des levures et/ou du kombucha, est ajoutée et la fermentation est arrêtée à un moment quelconque ou lorsqu'une teneur en alcool déterminée est atteinte.

6. Procédé selon l'une quelconque des revendications 4 ou 5, dans lequel la fermentation est arrêtée à une teneur en alcool d'au plus 1,2 % en volume.

7. Procédé selon l'une quelconque des revendications 4 à 6, dans lequel la fermentation est arrêtée à une teneur en alcool d'au plus 0,5 % en volume.

8. Procédé selon l'une quelconque des revendications 1 à 7, dans lequel le lactosérum végétal est traité avant la fermentation, notamment par ajout d'un acide et/ou par filtration et/ou centrifugation.

9. Procédé selon l'une quelconque des revendications 1 à 8, **caractérisé en ce que** la fermentation est réalisée simultanément avec une levure et du kombucha.

10. Procédé selon l'une quelconque des revendications 1 à 9, **caractérisé en ce qu'**une fermentation avec une levure a tout d'abord lieu, la fermentation s'arrête ou est arrêtée lors d'une deuxième étape, une culture de kombucha est ajoutée lors d'une troisième étape et la fermentation s'arrête ou est arrêtée lors d'une quatrième étape, notamment lorsqu'un degré d'acidité souhaité est atteint.

11. Procédé notamment selon l'une quelconque des revendications 1 à 10 pour la fabrication d'une base de boisson non alcoolisée ou légèrement alcoolisée, dans lequel un lactosérum végétal, notamment un lactosérum de soja, est fermenté avec une préparation cultivable de kombucha et dans lequel le lactosérum végétal est exposé pendant la fabrication de la base de boisson à une température ≥ 70 °C pendant une durée d'au plus 2,5 minutes, de préférence d'au plus 1,5 minute, de manière particulièrement préférée pas du tout.

12. Base de boisson, fabriquée par un procédé selon l'une quelconque des revendications 1 à 11.

13. Boisson non alcoolisée ou légèrement alcoolisée, pouvant être obtenue en utilisant une base de boisson selon la revendication 12.

14. Boisson selon la revendication 13, dans laquelle la base de boisson est diluée avec de l'eau et/ou carbonatée et/ou mélangée avec des arômes et/ou des jus de fruits ou des concentrés de jus de fruits et/ou des huiles aromatiques; des extraits végétaux alcooliques et/ou d'autres agents aromatisants et/ou du sucre ou des édulcorants, et dans laquelle le pH de la boisson est compris entre environ 2,8 et environ 3,5.
